# EUROPÄISCHE PATENTANMELDUNG

(11) **EP 3 373 423 A1**
(43) Veröffentlichungstag der Anmeldung: **12.09.2018**
(21) Anmeldenummer: 17160141.2
(22) Anmeldetag: 09.03.2017
(51) Int. Cl.: H02K 9/18, H02K 9/10, H02K 9/12, H02K 9/14, H02K 9/16, H02K 9/19

(54) **KÜHLUNG EINER ELEKTRISCHEN MASCHINE**

(71) Anmelder: Siemens Aktiengesellschaft, 80333 München (DE)
(72) Erfinder: Rogginger, Christoph, 84384 Wittibreut (DE); Weiß, Sebastian, 90522 Oberasbach (DE); Willems, Patric, 92353 Postbauer-Heng (DE); Winkler, Günther, 4785 Haibach (AT)

(57) **Zusammenfassung**

Die Erfindung betrifft eine elektrische Maschine (40) mit:
- einem Gehäuse (12),
- einem Ständer,
- einem in einem Aufnahmeraum des Ständers drehbar gelagerten Läufer,
- einer Kühleinrichtung zum Abführen von Wärme aus dem Gehäuse (12),
- einem mit Kühlluft beaufschlagbaren Wärmeübertrager (14), der am Gehäuse (12) angeordnet und mit der Kühleinrichtung gekoppelt ist,
- einem Kühlluftkanal (16), und
- einem Ventilator (48) zum Einbringen der Kühlluft in den Kühlluftkanal (16), wobei der Ventilator (48) ein in einem Ventilatorgehäuse (50) drehbar antreibbar gelagertes Luftrad (42) aufweist, wobei das Ventilatorgehäuse (50) zwei gegenüberliegende Lufteinlassöffnungen (44,46), zwischen denen das Luftrad (42) angeordnet ist, und wenigstens eine in einer radialen Richtung des Luftrads (42) angeordnete Luftauslassöffnung (52) aufweist.

Der Erfindung liegt die Aufgabe zugrunde, bezüglich der Geräuschentwicklung der elektrischen Maschine eine Verbesserung zu bewirken. Demzufolge ist wenigstens eine der beiden Lufteinlassöffnungen (44,46) zumindest bereichsweise nach Art einer Düse (54,56) ausgebildet.

## Beschreibung

Die Erfindung betrifft eine Maschine mit einem Gehäuse, einem im Gehäuse drehfest angeordneten Ständer, einem in einem Aufnahmeraum des Ständers drehbar gelagerten Läufer, einer Kühleinrichtung zum Abführen von Wärme aus dem Gehäuse heraus, einem mit Kühlluft beauschlagbaren Wärmeübertrager, der am Gehäuse angeordnet und mit der Kühleinrichtung gekoppelt ist, einem Kühlluftkanal zum Zuführen und/oder Abführen der Kühlluft, und einem Ventilator zum Einbringen der Kühlluft in den Kühlluftkanal, wobei der Ventilator ein in einem Ventilatorgehäuse drehbar antreibbar gelagertes Luftrad aufweist, wobei das Ventilatorgehäuse zwei gegenüberliegende Lufteinlassöffnungen, zwischen denen das Laufrad angeordnet ist, und wenigstens eine in einer radialen Richtung des Laufrads angeordnete Luftauslassöffnung aufweist.

Gattungsgemäße elektrische Maschinen sind dem Grunde nach im Stand der Technik umfänglich bekannt, sodass es eines gesonderten druckschriftlichen Nachweises hierfür nicht bedarf. Bei einer elektrischen Maschine, insbesondere einer rotierenden elektrischen Maschine, ist in der Regel der Ständer als Stator vorgesehen, der üblicherweise eine im Wesentlichen kreisförmige Durchgangsöffnung als Aufnahmeraum zur Aufnahme des als Rotor ausgebildeten Läufers bereitstellt. In der Durchgangsöffnung ist der Läufer drehbar gelagert angeordnet, wobei zwischen dem Läufer und dem Ständer ein Luftspalt ausgebildet ist.

Eine elektrische Maschine ist eine Vorrichtung, die elektrische Energie in mechanische Energie, insbesondere Bewegungsenergie in einem Motorbetrieb und/oder mechanische Energie in eine elektrische Energie in einem Generatorbetrieb umformt. Bei der Bewegung handelt es sich in der Regel um eine Drehbewegung, die vom Läufer ausgeführt wird. Der Ständer ist im Unterschied zum Läufer in der Regel drehfest angeordnet, das heißt, bei der Drehbewegung handelt es sich um eine Drehbewegung des Läufers gegenüber dem Ständer.

Der Ständer und der Läufer sind mittels eines magnetischen Flusses verkettet, wodurch im Motorbetrieb die Kraftwirkung, nämlich das Drehmoment, erzeugt wird, die den Läufer gegenüber dem Ständer drehend antreibt, und im Generatorbetrieb dem Läufer zugeführte mechanische Energie in Form einer Rotation in elektrische Energie umwandelt. Zu diesem Zweck weisen der Ständer und der Läufer jeweils eine von einem elektrischen Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die an ein mehrphasiges, insbesondere dreiphasiges elektrisches Wechselspannungsnetz angeschlossen sind, wie beispielsweise Asynchronmaschinen, Synchronmaschinen, Synchronmaschinen mit Dämpferkäfig oder dergleichen oder auch Gleichstrommaschinen wie Nebenschluss-oder Reihenschlussmaschinen oder dergleichen.

Rotierende elektrische Maschinen weisen in der Regel ein Gehäuse auf, welches die Bestandteile der rotierenden elektrischen Maschine umschließt, zumindest jedoch den Ständer und den Läufer. Die elektrische Maschine weist in der Regel auch eine Kühleinrichtung zum Abführen der Wärme aus dem Gehäuse heraus mittels eines Kühlfluids auf. Die Kühleinrichtung kann in das Gehäuse integriert angeordnet sein. Darüber hinaus kann sie aber auch zumindest teilweise in den Ständer und/oder den Läufer integriert angeordnet sein.

Bei elektrischen Maschinen, die gegenüber einer äußeren Atmosphäre getrennt ausgebildet sein sollen, beispielsweise in dem sie hermetisch gegenüber dieser abgedichtet sind, weisen häufig eine Kühleinrichtung auf, die maschinenseitig einen geschlossenen Kühlkreislauf für das Kühlfluid bereitstellt. Das Kühlfluid kann flüssig oder auch gasförmig, insbesondere Luft, sein. Die Kühleinrichtung ist vorzugsweise an einen Wärmeübertrager angeschlossen, der vom Kühlfluid durchströmt wird. Zu diesem Zweck ist die Kühleinrichtung fluidsch mit dem Wärmeübertrager gekoppelt.

Der Wärmeübertrager weist vorzugsweise einen separaten, Fluidkanal zum Führen von Kühlluft auf, mittels dem das Kühlfluid zum Zwecke des Wärmeaustausches kontaktiert werden kann. Das Kühlfluid sowie die Kühlluft sind im Wärmeübertrager stoffschlüssig getrennt.

Damit die Kühlluft den Wärmeübertrager durchströmen kann, ist der Ventilator vorgesehen, der dem Einbringen der Kühlluft in den Kühlluftkanal dient. Der Ventilator weist ein eigenes Ventilatorgehäuse auf, in welchem ein Luftrad des Ventilators drehbar und antreibbar gelagert ist. Das Ventilatorgehäuse weist darüber hinaus zwei gegenüberliegende Lufteinlassöffnungen, zwischen denen das Luftrad angeordnet ist, und wenigstens eine in einer radialen Richtung des Luftrads angeordnete Luftauslassöffnung auf. Das Luftrad ist in der Regel derart angeordnet, dass eine Rotationsachse des Luftrades quer zu einer durch die beiden gegenüberliegenden Lufteinlassöffnungen gebildeten Ebene ausgerichtet ist.

Auch wenn sich dieser Stand der Technik dem Grunde nach bewährt hat, so zeigen sich dennoch Nachteile. Im bestimmungsgemäßen Betrieb der elektrischen Maschine treten aufgrund des Betriebs des Ventilators Geräusche auf, die je nach Betriebszustand der elektrischen Maschine sehr störend sein können.

Der Erfindung liegt die Aufgabe zugrunde, bezüglich der Geräuschentwicklung der elektrischen Maschine eine Verbesserung zu bewirken.

Als Lösung wird mit der Erfindung eine elektrische Maschine gemäß dem unabhängigen Anspruch 1 vorgeschlagen.

Vorteilhafte Weiterbildungen ergeben sich anhand von Merkmalen der abhängigen Ansprüche.

Für eine gattungsgemäße elektrische Maschine wird mit der Erfindung insbesondere vorgeschlagen, wenigstens eine der beiden Lufteinlassöffnungen zumindest bereichsweise nach Art einer Düse ausgebildet ist.

Die Erfindung basiert auf der Erkenntnis, dass durch die Ausgestaltung der Lufteinlassöffnung nach Art einer Düse die Luftströmung in den Ventilator hinein verbessert werden kann, sodass eine günstigere Luftströmung insgesamt erreicht und dadurch auch eine Geräuschentwicklung reduziert werden kann. Dabei basiert die Erfindung ferner auf dem Gedanken, dass gerade an der Lufteinlassöffnung eine Maßnahme zur Geräuschreduktion besonders günstig ist, zumal dort auch das Luftrad angeordnet ist, welches seinerseits ebenfalls die Luftströmung beeinflusst. Durch die Ausgestaltung der Lufteinlassöffnung nach Art einer Düse kann ein günstigeres Anströmverhalten der Kühlluft in Bezug auf das Luftrad erreicht werden, sodass insgesamt eine Geräuschreduktion erreicht werden kann.

Dadurch kann mit der Erfindung auch erreicht werden, dass bei elektrischen Maschinen eine hohe Ausnutzung in Bezug auf die Kühlleistung bereitgestellt werden kann, die in der Regel eine sehr effiziente Kühlung benötigt. Bei großen elektrischen Maschinen wird dies mittels des Wärmeübertragers erreicht. Hier kommen hauptsächlich zwei Varianten zum Einsatz, nämlich eine Rückkühlung mittels Luft-Wasser-Wärmekoppler sowie eine Rückkühlung mittels Luft-Luft-Wärmeübertrager. Auch wenn im Folgenden die Anwendung eines Luft-Luft-Wärmeübertragers zugrundegelegt wird, ist das Funktionsprinzip der Erfindung grundsätzlich auch auf einen Luft-Wasser-Wärmeübertrager entsprechend anwendbar.

Bei einem Luft-Luft-Wärmeübertrager wird eine als Kühlfluid dienende Innenluft innerhalb des Gehäuses der elektrischen Maschine mit einem beispielsweise Röhrenwärmeübertrager rückgekühlt. Hierzu ist es erforderlich, Kühlluft durch Kühlrohre des Wärmeübertragers zu führen, um die Wärme aus dem Wärmeübertrager abführen zu können. Üblicherweise wird Umgebungsluft als Kühlluft genutzt. Dem Grunde nach kann jedoch auch ein anderes geeignetes fluides Kühlmittel hierfür eingesetzt werden. Durch die Kühlrohre des Wärmeübertragers wird eine stoffliche Trennung zwischen den dem Kühlfluid und der Kühlluft gewährleistet. Der maschineninterne Luftstrom entspricht somit dem Kühlfluid der Kühleinrichtung, wohingegen die Umgebungsluft der Kühlluft entspricht.

Um die Förderung der Umgebungsluft zum Wärmeübertrager zu ermöglichen, ist eine technische Luftfördereinrichtung erforderlich. Diese wird vorliegend durch einen Luftkanal mit einem Ventilator bereitgestellt. Diese Luftfördereinrichtung stellt im bestimmungsgemäßen Betrieb der elektrischen Maschine eine nicht unerhebliche Geräuschemissionsquelle dar. Üblicherweise ist der Ventilator über den Läufer der elektrischen Maschine angetrieben, beispielsweise indem das Luftrad an einer Läuferwelle befestigt ist und sich im bestimmungsgemäßen Betrieb mit dieser mitdreht. Durch die Erfindung ist es nunmehr möglich, die Geräuschemission des Ventilators deutlich zu reduzieren.

Für elektrische Maschinen, die überwiegend in einem oberen Drehzahlbereich mit nur einer Drehrichtung betrieben werden, erweist sich eine sogenannte eigenbelüftete Luftfördereinrichtung als vorteilhaft. Da bei dieser Ausgestaltung keine separate elektrische Antriebseinheit für den Ventilator, insbesondere dessen Luftrad erforderlich ist, ist auch die Zuverlässigkeit dieser elektrischen Maschine erhöht, weil eine zusätzliche technische Baugruppe in Form der Antriebseinheit eingespart werden kann. Bei der eigenbelüfteten Luftfördereinrichtung wird vorzugsweise eine Nichtantriebsseite des Läufers beziehungsweise einer Läuferwelle des Läufers genutzt, welches nicht-antriebsseitige Wellenende aus der elektrischen Maschine beziehungsweise dem Gehäuse der elektrischen Maschine herausgeführt ist und für den Antrieb des Luftrades genutzt werden kann. Das Luftrad selbst kann nach Art eines Radial- oder auch eines Axialluftrads ausgebildet sein und entsprechende Luftschaufeln aufweisen.

Für die eigenbelüftete Luftfördereinrichtung kommt aufgrund des Wartungsaufwandes und der Verbesserung der Zuverlässigkeit der elektrischen Maschine ein Übersetzungsgetriebe, welches eine Kopplung des Luftrades mit dem Wellenende der Läuferwelle herstellen könnte, in der Regel nicht in Frage. Aus diesem Grund ist das Luftrad bei einer eigenbelüfteten Luftfördereinrichtung in der Regel auf eine Betriebsdrehzahl der elektrischen Maschine im bestimmungsgemäßen Betrieb ausgelegt, weil es vorzugsweise unmittelbar von der Läuferwellen angetrieben wird.

Ein Axialluftrad ist zwar geeignet, einen vergleichsweise großen Volumenstrom an Kühlluft zu fördern, jedoch erweist es sich dabei als nachteilig, dass, um einen hohen Gegendruck überwinden zu können, das Luftrad entweder einen großen Durchmesser aufweisen und/oder bei einer hohen Drehzahl betrieben werden muss. Dabei zeigt sich insbesondere der Nachteil, dass die Geräuschentwicklung durch ein Axialluftrad mit dessen Größe in Bezug auf den Durchmesser und seiner Betriebsdrehzahl steigt. Darüber hinaus ist zu bedenken, dass der Betrieb eines Axialluftrades eine axiale Kraft in Bezug auf die Läuferwelle auf diese überträgt. Insbesondere bei schwimmend gleitgelagerten Läuferwellen können hierbei zulässige Grenzwerte schnell überschritten werden.

Weiterhin erweist es sich als nachteilig, dass bei modular aufgebauten elektrischen Maschinen mit einer Kühleinrichtung, die einen Innenumluftkühlkreislauf aufweisen, bauartbedingt der Luftstrom der Kühlluft unmittelbar nach Austreten aus dem Axialventilator um etwa 90° umgelenkt werden muss.

Dies ist zwar bei Radialventilatoren nicht erforderlich, jedoch kommt ein Radialluftrad mit entsprechend großem Durchmesser bei einer großen Betriebsdrehzahl schnell an Festigkeits- und/oder Stabilitätsgrenzen. Darüber hinaus ist zu beachten, dass einflutige Radiallufträder zudem ebenfalls wie Axiallufträder nicht frei von einer axialen Kraftübertragung auf die Läuferwelle sind. Gleichwohl steht dem als Vorteil entgegen, dass der Radialventilator eine deutlich höhere Druckerzeugung im Vergleich zu einem entsprechend leistungsfähigen Axialventilator ermöglicht. Dabei erweist sich jedoch die Volumenstrombegrenzung durch die Größe einer Ansaugöffnung beziehungsweise Lufteinlassöffnung des Radialvenitlators als nachteilig, die ihrerseits von einem Durchmesser des Luftrads abhängt und somit drehzahlbegrenzend wirkt. Bei hohen Volumenströmen ist deshalb zwangsläufig ein Radialventilator mit einem großem Durchmesser, das heißt, großen mechanischen Abmessungen erforderlich, ohne dass der erforderliche große Druck benötigt wird, den der Radialventilator zu erzeugen im Stande ist. Dann besteht jedoch das Problem, dass der Radialventilator in einem ungünstigen Betriebszustand betrieben werden kann, woraus sich ein ungünstiger Wirkungsgrad und - wegen des großen Durchmessers - eine entsprechend hohe Geräuschentwicklung ergeben kann. Aus diesem Grund ist bei der Erfindung vorgesehen, dass der Ventilator zwei gegenüberliegende Lufteinlassöffnungen aufweist. Dadurch können die vorgeschriebenen Probleme bezüglich des Radialventilators vermieden, zumindest jedoch reduziert werden. Es wird somit ein zweiflutiger Ventilator bereitgestellt, das heißt, ein Ventilator, dessen Ventilatorgehäuse zwei gegenüberliegende Lufteinlassöffnungen aufweist.

Die Erfindung basiert darauf, dass ein zweiflutiger Ventilator, vorzugsweise als Wellenventilator, eingesetzt wird. Insbesondere kann vorgesehen sein, dass eine der beiden Lufteinlassöffnungen einen Luftansaugweg in einem Raum zwischen einem Luftführungskasten und einem nicht-antriebsseitigen Lagerschild der elektrischen Maschine angeordnet ist.

Ist das Luftrad im Wesentlichen bezüglich der Luftansaugung symmetrisch aufgebaut, kann ferner erreicht werden, dass auf eine Antriebseinheit für das Luftrad, beispielsweise die Läuferwelle, im Wesentlichen keine axialen Kräfte ausgeübt werden. Ferner ist es möglich, den Durchmesser des Luftrades bei elektrischen Maschinen, die für hohe Drehzahlen ausgebildet sind, auch bei großen Volumenströmen für die Kühlluft klein zu halten. Dadurch können bessere Wirkungsgrade solcher Ventilatoren erreicht werden, wobei zugleich Geräuschemissionen reduziert werden können.

Es kann ferner vorgesehen sein, dass sich in Strömungsrichtung an den nach Art einer Düse ausgebildeten Bereich ein nach Art eines Diffusors ausgebildeter Bereich anschließt. Dadurch ist es möglich, eine weitere Verbesserung in Bezug auf die Strömung der Kühlluft erreichen zu können. Insbesondere kann ein Übergang der Strömung der Kühlluft von der Lufteinlassöffnung zum Luftrad verbessert werden. Dadurch kann sowohl der Wirkungsgrad erhöht, als auch die Geräuschentwicklung weiter reduziert werden.

Besonders vorteilhaft erweist es sich, wenn in Strömungsrichtung vor der wenigstens einen der beiden Lufteinlassöffnungen eine Schalldämmwand ausgebildet ist. Mit der Schalldämmwand kann eine weitere Reduzierung der Geräuschemission erreicht werden. Die Schalldämmwand ermöglicht es, eine direkte Schallemission durch die Lufteinlassöffnung zu reduzieren beziehungsweise zu vermeiden. Durch die Lufteinlassöffnung austretende Geräusche können dadurch besser gedämpft werden.

Die Schalldämmwand kann ein separates Bauteil sein, welches im Bereich der Lufteinlassöffnung mit einem ausreichenden Abstand angeordnet ist, sodass die Luftströmung der Kühlluft im Wesentlichen nicht behindert wird. Die Schalldämmwand kann insbesondere zumindest ein Teil des Ventilatorgehäuses oder auch des Gehäuses der elektrischen Maschine sein. Die Schalldämmwand kann aus Metall, Keramik, Kunststoff, einem Verbundwerkstoff und/oder dergleichen gebildet sein. Darüber hinaus besteht die Möglichkeit, dass die Schalldämmwand zumindest lufteinlassöffnungsseitig eine Oberflächenstruktur aufweist, die es erlaubt, Geräusche zu reduzieren. Die Oberflächenstruktur ist vorzugsweise hinsichtlich ihrer Abmessungen an einen Frequenzbereich der Geräuschemission durch die Lufteinlassöffnung angepasst ausgebildet. Dadurch kann eine gute Dämpfung der Geräuschemission erreicht werden. Die Oberflächenstruktur kann beispielsweise Waben, Röhren, Kombinationen hiervon und/oder dergleichen aufweisen.

Die Schalldämmwand kann zum Beispiel als eine dünne Wand ausgebildet sein, die vorzugsweise im Wesentlichen parallel zu einer Ebene, in der die Lufteinlassöffnung liegt, ausgebildet ist. Darüber hinaus besteht natürlich die Möglichkeit, dass die Schalldämmwand schräg gegenüber dieser Ebene ausgebildet beziehungsweise angeordnet ist. Die Schalldämmwand braucht keine Ebene in der Fläche darzustellen, sondern sie kann auch gekrümmt ausgebildet sein, zum Beispiel einen oder mehrere Knicke aufweisen und/oder dergleichen. Abmessungen der Schalldämmwand sind vorzugsweise derart gewählt, dass Abmessungen der Lufteinlassöffnung überragt sind. Die Abmessungen der Schalldämmwand können darüber hinaus auch abhängig von einer Entfernung der Schalldämmwand zur Lufteinlassöffnung sein. So kann vorgesehen sein, dass die Abmessungen mit zunehmendem Abstand der Schalldämmwand von der Lufteinlassöffnung größer gewählt sind.

Darüber hinaus wird vorgeschlagen, dass die Schalldämmwand zumindest lufteinlassöffnungsseitig ein Schalldämmmaterial aufweist. Das Schalldämmmaterial kann einstückig mit der Schalldämmwand ausgebildet sein. Es kann beispielsweise als Beschichtung auf der der Lufteinlassöffnung zugewandten Oberfläche der Schalldämmwand angeordnet sein. Das Schalldämmmaterial kann beispielsweise mittels Kleben, Befestigungsmitteln wie Nägeln, Nieten und/oder dergleichen, Spannen und oder dergleichen an der Schalldämmwand befestigt sein. Das Schalldämmmaterial kann zum Beispiel einen Faserwerkstoff, der beispielsweise Keramikfasern nutzt, aber auch Steinwolle, Glaswolle, Stahlwolle, Kombinationen hiervon und/oder dergleichen umfassen. Darüber hinaus kann das Schalldämmmaterial natürlich auch einen Kunststoff umfassen, insbesondere einen aufgeschäumten Kunststoff, der darüber hinaus auch mit Fasern verstärkt sein kann.

Schließlich wird vorgeschlagen, dass das Luftrad nach Art eines Radialventilators ausgebildet ist und einen nach Art eines Diffusors ausgebildeten Bereich aufweist, der sich in Strömungsrichtung an die wenigstens eine, zumindest bereichsweise nach Art einer Düse ausgebildete der beiden Lufteinlassöffnungen anschließt. Dadurch ist es möglich, dass ein Strömungsübergang von der Lufteinlassöffnung zum Luftrad besser angepasst werden kann. Dies erlaubt es, nicht nur den Wirkungsgrad des Ventilators zu erhöhen, sondern auch die Geräuschentwicklung weiter zu reduzieren.

Weitere Vorteile und Merkmale sind der folgenden Beschreibung von Ausführungsbeispielen anhand der beigefügten Figuren zu entnehmen. In den Figuren bezeichnen gleiche Bezugszeichen gleiche Merkmale und Funktionen.

Es zeigen:
- FIG 1: eine schematische Seitenansicht einer elektrischen Maschine mit einem Wärmeübertrager sowie mit einem einflutigen Ventilator in einer Schnittansicht,
- FIG 2: die Schnittansicht des einflutigen Ventilators in FIG 1 in einer vergrößerten Darstellung,
- FIG 3: eine schematische Darstellung wie FIG 1, wobei der Ventilator hier als zweiflutiger Ventilator ausgebildet ist,
- FIG 4: eine schematische Darstellung wie FIG 2, bei der der zweiflutige Ventilator gemäß FIG 3 vergrößert dargestellt ist, und
- FIG 5: eine schematische Darstellung wie FIG 3, bei der ergänzend Schalldämmwände vorgesehen sind.

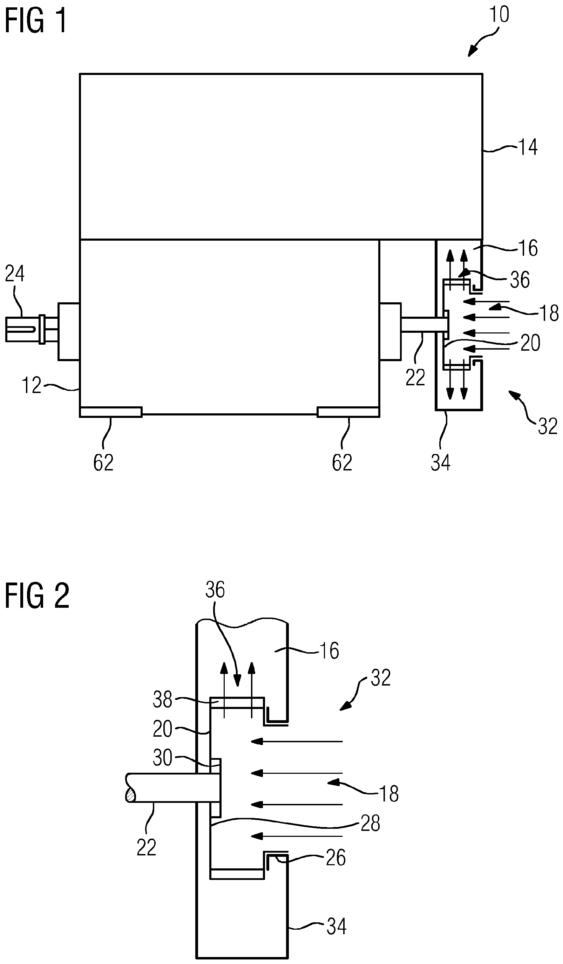

FIG 1 zeigt in einer schematischen Seitenansicht eine elektrische Maschine 10, mit einem Gehäuse 12, in dem - in den FIG nicht dargestellt - drehfest ein Ständer der elektrischen Maschine 10 angeordnet ist. Der Ständer stellt eine einen Aufnahmeraum bildende Durchgangsöffnung bereit, in der drehbar ein Läufer gelagert ist. Der Läufer weist Läuferwelle auf, die ein Antriebsende 24 sowie ein Nicht-Antriebsende 22 aufweist. Die Enden 22, 24 der Läuferwelle ragen aus dem Gehäuse 12 der elektrischen Maschine 10 heraus.

Ferner umfasst die elektrische Maschine 10 eine Kühleinrichtung zum Abführen von Wärme aus dem Gehäuse 12 heraus mittels eines Kühlfluids, welches vorliegend Luft ist. Die Kühleinrichtung stellt einen geschlossenen Kühlkreislauf bereit und ist an einen Wärmeübertrager 14 angeschlossen. Die Kühleinrichtung selbst ist in den FIG nicht dargestellt.

Der Wärmeübertrager 14 ist mit Kühlluft beaufschlagbar, die über einen Kühlluftkanal 16 von einem Ventilator 32 bereitgestellt wird. Über eine nicht weiter dargestellte Luftaustrittsöffnung wird die Kühlluft von dem Wärmeübertrager 14 an die Umgebung abgegeben.

Der Ventilator 32 weist ein in einem Ventilatorgehäuse 34 drehbar gelagertes Luftrad 20 auf, welches vorliegend als Radialluftrad ausgebildet ist. Das Ventilatorgehäuse 34 umfasst eine an einer Stirnplatte 26 angeordnete Lufteinlassöffnung 18, die vorliegend koaxial zu einer Drehachse des Luftrads 20 ausgebildet ist. In eine radiale Richtung des Luftrads 20 ist eine Luftauslassöffnung 36 ausgebildet.

FIG 2 zeigt eine vergrößerte Darstellung des Ventilators 32 in Schnittdarstellung. Zu erkennen ist, dass das Luftrad 20 an das Ende 22 der Läuferwelle angeflanscht ist, wodurch eine Ventilatornabe 30 ausgebildet und die Drehachse bestimmt sind. Das Luftrad 20 wird also unmittelbar von der elektrischen Maschine 10 selbst angetrieben. Bei dem Ventilator 32 handelt es sich somit um einen einflutigen Ventilator.

Das Luftrad 20 weist radial im Umfang angeordnete Luftschaufeln 38 auf, mittels denen die Luft in bestimmungsgemäßer Weise gefördert werden kann. Die Luftschaufeln 38 sind über eine Schottwand 28 der Ventilatornabe 30 mit dem Ende 22 der Läuferwelle mechanisch verbunden.

Die elektrische Maschine 10 ist als rotierende elektrische Maschine ausgebildet. Zum Aufstellen der elektrischen Maschine 10 weist diese Füße 62 auf, die dazu dienen, die elektrische Maschine 10 auf einem geeigneten Fundament anordnen zu können. Mit den Füßen 62 wird die elektrische Maschine 10 am Fundament befestigt.

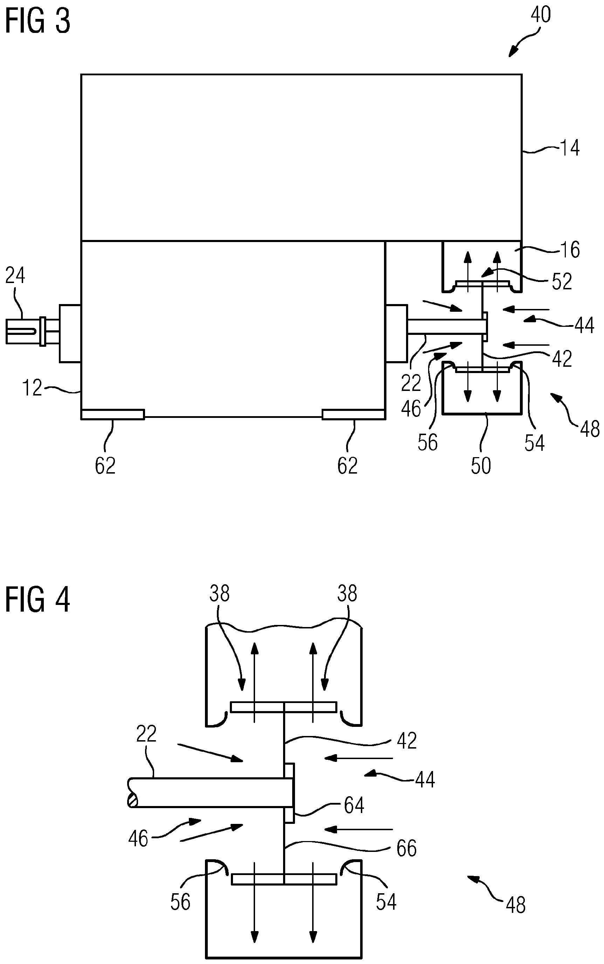

FIG 3 zeigt in einer schematischen Seitenansicht eine elektrische Maschine 40 mit einem geschnittenen Ventilator eine Darstellung wie FIG 1, jedoch nun mehr mit einem zweiflutigen Ventilator 48. Der Ventilator 48 weist ein Ventilatorgehäuse 50 auf, in dem drehbar antreibbar ein Luftrad 42 angeordnet ist. Das Luftrad 42 ist - wie bei der vorhergehenden Ausgestaltung - mit einem nicht-antriebsseitigen Ende 22 einer Läuferwelle der elektrischen Maschine 40 verbunden.

Das Ventilatorgehäuse 50 weist zwei gegenüberliegende Lufteinlassöffnungen 44, 46 auf, die vorliegend im Wesentlichen kreisrund ausgebildet sind. Zwischen den Lufteinlassöffnungen 44, 46 ist das Luftrad 42 angeordnet. Das Luftrad 42 ist vorliegend als zweiseitiges Radialluftrad ausgebildet, sodass durch beide der Lufteinlassöffnungen 44, 46 entsprechend Kühlluft angesaugt und in den bereits zu den FIG 1 und 2 erläuterten Kühlluftkanal 16 gefördert wird. Die weiteren Merkmale der elektrischen Maschine 40 entsprechen denen, wie sie bereits anhand der FIG 1 und 2 zu der elektrischen Maschine 10 erläutert worden sind, weshalb ergänzend auf dies Ausführungen Bezug genommen wird. Die Ausgestaltung gemäß FIG 3 unterscheidet sich somit von der Ausgestaltung gemäß FIG 1 lediglich durch den Ventilator 48, der vorliegend zweiflutig gegenüber dem Ventilator 32 der FIG 1 und 2 ausgebildet ist.

Auch in diesem Ausführungsbeispiel ist ventilatorseitig eine Luftauslassöffnung 52 vorgesehen, durch die vom Ventilator 48 bereitgestellte Kühlluft in den Kühlluftkanal 16 gefördert wird. Die weitere Funktion der Kühlung entspricht der, wie sie bereits zuvor erläutert wurde.

Vorliegend sind die beiden Lufteinlassöffnungen 44, 46 bereichsweise nach Art einer Düse 54, 56 ausgebildet. Dadurch wird eine verbesserte Luftführung erreicht, sodass eine Geräuschentwicklung reduziert und der Wirkungsgrad des Ventilators 48 verbessert werden kann.

FIG 4 zeigt eine vergrößerte Darstellung des Ventilators 48 gemäß FIG 3. Zu erkennen ist, dass das Luftrad 42 mittels einer Ventilatornabe 64 an das nicht-antriebsseitige Ende 22 der Läuferwelle angeflanscht ist. Dadurch ist es drehfest mit der Läuferwelle verbunden.

Das Luftrad 42 weist Paare von Luftschaufeln 38 auf, sodass zwei getrennte Luftförderbereiche entstehen, wobei jeweils einer der Luftförderbereiche einer der beiden Lufteinlassöffnungen 44, 46 zugeordnet ist. Die Luftschaufeln 38 sind über eine mittig liegende Schottwand 66 mit der Ventilatornabe 64 verbunden.

Aus FIG 4 ist ferner deutlich ersichtlich, dass die Lufteinlassöffnungen 44, 46 jeweils einen nach Art einer Düse ausgebildeten Bereich 54, 56 aufweisen. Diese Bereiche 54, 56 sind umlaufend in Bezug auf die Lufteinlassöffnungen 44, 46 ausgebildet.

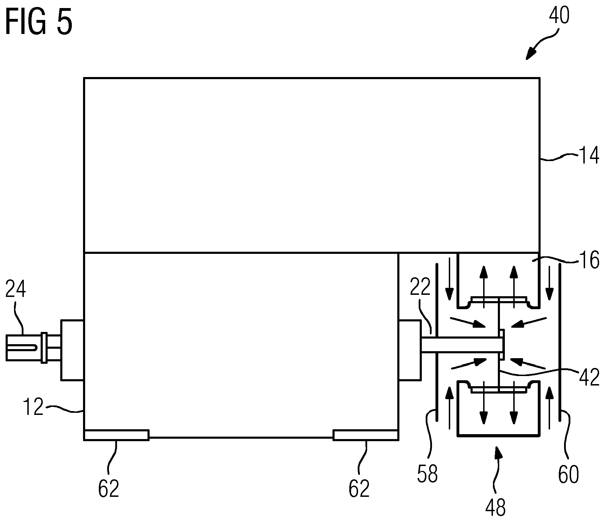

FIG 5 zeigt ein weiteres Ausführungsbeispiel, wobei diese Ausgestaltung auf der Ausgestaltung gemäß der FIG 3 und 4 basiert, weshalb ergänzend auf die diesbezüglichen Ausführungen verwiesen wird.

Die elektrische Maschine 40 gemäß FIG 5 umfasst ergänzend gegenüber der elektrischen Maschine 40 der FIG 3 und 4 in Strömungsrichtung vor den beiden Lufteinlassöffnungen 44, 46 jeweils eine Schalldämmwand 58, 60.

Die Schalldämmwände 58, 60 sind vorliegend als im Wesentlichen ebene Metallwände ausgebildet und überragen in ihren ebenen Abmessungen die Abmessungen der jeweiligen Lufteinlassöffnungen 44, 46. Dadurch kann eine weitere Geräuschreduktion erreicht werden.

Ein Abstand der Schalldämmwände 58, 60 gegenüber den jeweiligen Lufteinlassöffnungen 44, 46 ist jeweils derart gewählt, dass eine Beeinflussung der Luftströmung, insbesondere des Strömungswiderstands, im Wesentlichen vernachlässigt werden kann.

Die Schalldämmwände 48, 60 weisen lufteinlassseitig eine Schalldämmbeschichtung aus, die vorliegend durch ein Kunststoff-Schaummaterial gebildet ist. Alternativ oder ergänzend können jedoch auch andere Faserwerkstoffe zum Einsatz kommen, beispielsweise Steinwolle, Glaswolle, Stahlwolle, Kombinationen hiervon und/oder dergleichen.

Die Ausführungsbeispiele dienen lediglich der Erläuterung der Erfindung und sollen diese nicht beschränken. Natürlich können bezüglich der Merkmale Variationen vorgesehen sein, ohne den Grundgedanken der Erfindung zu verlassen. Der nach Art einer Düse ausgebildete Bereich braucht nicht vollständig umfänglich in Bezug auf die Lufteinlassöffnung ausgebildet zu sein. Es kann vorgesehen sein, dass auch lediglich ein Teil der Lufteinlassöffnung nach Art einer Düse ausgebildet ist. Darüber hinaus können natürlich weitere strömungstechnische Anpassungen im Bereich der Lufteinlassöffnungen im Rahmen der Erfindung vorgesehen sein.

## Patentansprüche

1. Elektrische Maschine (40) mit:
- einem Gehäuse (12),
- einem im Gehäuse (12) drehfest angeordneten Ständer,
- einem in einem Aufnahmeraum des Ständers drehbar gelagerten Läufer,
- einer Kühleinrichtung zum Abführen von Wärme aus dem Gehäuse (12) heraus,
- einem mit Kühlluft beaufschlagbaren Wärmeübertrager (14), der am Gehäuse (12) angeordnet und mit der Kühleinrichtung gekoppelt ist,
- einem Kühlluftkanal (16) zum Zuführen und/oder Abführen der Kühlluft, und
- einem Ventilator (48) zum Einbringen der Kühlluft in den Kühlluftkanal (16), wobei der Ventilator (48) ein in einem Ventilatorgehäuse (50) drehbar antreibbar gelagertes Luftrad (42) aufweist, wobei das Ventilatorgehäuse (50) zwei gegenüberliegende Lufteinlassöffnungen (44,46), zwischen denen das Luftrad (42) angeordnet ist, und wenigstens eine in einer radialen Richtung des Luftrads (42) angeordnete Luftauslassöffnung (52) aufweist,
**dadurch gekennzeichnet, dass** wenigstens eine der beiden Lufteinlassöffnungen (44, 46) zumindest bereichsweise nach Art einer Düse (54,56) ausgebildet ist.

2. Elektrische Maschine nach Anspruch 1, **dadurch gekennzeichnet, dass** sich in Strömungsrichtung an den nach Art einer Düse (54,56) ausgebildeten Bereich ein nach Art eines Diffusors ausgebildeter Bereich anschließt.

3. Elektrische Maschine nach Anspruch 1 oder 2, **dadurch gekennzeichnet, dass** in Strömungsrichtung vor der wenigstens einen der beiden Lufteinlassöffnungen (44,46) eine Schalldämmwand (58,60) ausgebildet ist.

4. Elektrische Maschine nach Anspruch 3, **dadurch gekennzeichnet, dass** die Schalldämmwand (58, 60) zumindest lufteinlassöffnungsseitig ein Schalldämmmaterial aufweist.

5. Elektrische Maschine nach einem der Ansprüche 1 bis 4, **dadurch gekennzeichnet, dass** das Luftrad (42) nach Art eines Luftrads eines Radialvenilators ausgebildet ist und einen nach Art eines Diffusors ausgebildeten Bereich aufweist, der sich in Strömungsrichtung an die wenigstens eine zumindest bereichsweise nach Art einer Düse (54, 56) ausgebildete der beiden Lufteinlassöffnungen (44, 46) anschließt.
